# EUROPEAN PATENT SPECIFICATION

(11) **EP 0 847 407 B1**
(45) Date of publication and mention of the grant of the patent: **23.10.2002**
(21) Application number: 96929036.0
(22) Date of filing: 23.08.1996
(51) Int. Cl.: C08F 14/26

(54) **TETRAFLUORETHYLENE POLYMERIZATION PROCESS**
VERFAHREN ZUR POLYMERISATION VON TETRAFLUORETHYLEN
PROCEDE DE POLYMERISATION DE TETRAFLUOROETHYLENE

(30) Priority: 31.08.1995 US 3097; 31.08.1995 US 3085; 23.07.1996 US 685085; 20.08.1996 US 700258
(43) Date of publication of application: 17.06.1998
(73) Proprietor: E.I. DU PONT DE NEMOURS AND COMPANY, Wilmington Delaware 19898 (US)
(72) Inventor: BAKER, Bruce, Edward, Wilmington, DE 19803-4824 (US); ZIPFEL, Roger, John, Washington, WV 26181-9579 (US)
(74) Representative: Matthews, Derek Peter
(86) International application number: US9613679
(87) International publication number: WO97008214

(56) References cited:
- EP-A- 0 103 975
- EP-A- 0 106 956
- US-A- 4 025 709
- US-A- 4 380 618
- High Performance Polymers: Their Origin and Development, eds. R.B. Seymour and G.S. Kirshenbaum, Elsevier, 1986, page 280.
- Ullmann's Encyclopedia of Industrial Chemistry, Vol. A11, VCH Verlagsgesellschaft mbH, 1988, pages 402 and 405.

## Description

### FIELD OF THE INVENTION

This invention relates to the aqueous dispersion polymerization of perfluorinated monomers.

### BACKGROUND OF THE INVENTION

Perfluoroalkyl ethane sulfonic acid and salts thereof, having the formula F(CF₂-CF₂)ₙCH₂-CH₂-SO₃M, wherein n is a cardinal number of 2 to 8 and M is a cation having a valence of 1, i.e. H, K, has been used as dispersing agent in the aqueous dispersion polymerization of tetrafluoroethylene (TFE) by itself or in combination with other copolymerizable fluorinated ethylenically unsaturated comomomers, as disclosed in U.S. Pat. 4,380,618. As disclosed in Example 2 of the patent, the dispersing agent is a mixture wherein the perfluoroalkyl group contains from 4 to 16 carbon atoms, averaging 8 carbon atoms. This surfactant is commercially available as Zonyl® TBS fluorochemical surfactant, and sometimes 8,2-TBS, the number 8 representing the average number of carbon atoms in the mixture of perfluoroalkyl groups and the number 2 representing the ethane carbon atoms. Atochem makes available FORAFAC®-1033 and 1176, which are understood to be the sulfonic acid and potassium salt, respectively, of 6,2-TBS, the number 6 representing perfluorohexyl (n = 3 in the above formula) as an emulsifier for the polymerization of fluorinated monomers. U.S. Patent 4,025,709 discloses the use of perfluoroalkyl ethane sulfonic acid and salts as emulsifier for the aqueous dispersion polymerization of the fluorinated monomer vinylidene fluoride. The perfluoroalkyl group of the emulsifier is disclosed to contain from 4 to 8 carbon atoms. Hexafluoropropylene may be copolymerized with the VF₂ to obtain 3 wt% HFP in the resultant copolymer (Examples 6 and 7). The advantage of these emulsifiers over perfluorooctanoate as the emulsifier is disclosed to be greater thermal stability of the VF₂ polymer as indicated by less color formation in the polymer when subjected to various thermal treatments. The patent shows reduced color formation when both C₈F₁₇-and C₆F₁₃-ethanesulfonic acid salts are used as the emulsifier and less improvement when the NH₄ salt is used.

The industry standard for the aqueous dispersion polymerization of perfluorocarbon monomers has been the use of perfluoroalkanoate dispersing agents, and in particular wherein the alkyl group averages 8 carbon atoms, which is the perfluorooctanoate tested as the comparison emulsifier in the '709 patent. This dispersing agent, sometimes called perfluorocaprylate and sometimes called C-8, is disclosed in countless publications describing the polymerization of TFE by itself or with other monomers. If any appreciable amount of C-8 is left in the polymer, it does cause discoloration of the perfluorocarbon polymer at the high temperatures of its melt fabrication and use, but this problem has been overcome by effective removal of the C-8 from the polymer prior to melt fabrication or sintering.

It has been discovered however, that C-8 bioaccumulates in animals, thus raising a health question, and making it desirable to replace this industry standard. In particular, it has been found that in a 14-day feeding study involving rodents and standard protocol and 300 ppm of C-8 in the rodents' diet, the amount of fluorine remaining in the rodents' blood seven days after the C-8 diet was stopped was 220 ppm, as compared to 0.56 ppm in rodents which received no C-8 in the diet. It has also been discovered that Zonyl TBS (8,2-TBS) has the problem of bioaccumulation which is indicated by increasing liver weight for rodents being fed a diet which contains this material. In particular, only 3 ppm of the 8,2-TBS in the rodents' diet for 14 days causes a 50% increase in liver weight. C-8 has a similar problem; 4.4 ppm of C-8 in the diet causes a 50% increase in liver weight.

An effective dispersing agent is needed for the polymerization of perfluorocarbon monomer which does not bioaccumulate.

### SUMMARY OF THE INVENTION

The present invention satisfies this need by virtue of the surprising discovery that 6,2-TBS, C₆F₁₃-CH₂CH₂-SO₃M, wherein M is a cation having a valence of 1, does not bioaccumulate as indicated by (a) 6,2-TBS being present in the rodents' blood at the level of only 0.45 ppm seven days after 300 ppm of 6,2-TBS was removed from the diet and (b) 6,2-TBS requiring 142 ppm in rodents' diet before an increase in liver weight of 50% occurs. In contrast to C-8 and 8,2-TBS (mixture of perfluoroalkyl groups containing 4 to 16 carbon atoms, averaging 8 carbon atoms), when only 3-4 ppm of 6,2-TBS is present in the diet, virtually no increase in liver weight occurs.

The present invention may be defined in the context of the process of polymerizing tetrafluoroethylene (TFE), optionally with at least one other perfluorinated copolymerizable monomer, or with Chlorotrifluoroethylene in an amount of less than 0.5 mol% in an aqueous medium containing water soluble initiator and dispersing agent to obtain an aqueous dispersion of the corresponding fluorocarbon polymer particles, polytetrafluoroethylene (PTFE) or melt fabricable tetrafluoroethylene polymer, as the case may be, the improvement comprising carrying out the polymerizing wherein the dispersing agent is C₆F₁₃-CH₂CH₂-SO₃M, wherein M is a cation having a valence of 1. For simplicity, this dispersing agent can be referred to as 6,2-TBS.

While the present invention is defined in terms of using the 6,2-TBS as the dispersing agent for making the fluorocarbon polymer, the unexpected safety of this particular "cut" of the 8,2-TBS mixture as compared to the 8,2-TBS mixture is part of the invention as a whole.

It is also unexpected that 6,2-TBS is operable as a dispersing agent to make PTFE. By "operable" is meant that the PTFE can be made to have high molecular weight, as indicated by a melt viscosity of at least 1 X 10⁹ Pa·s, desired particle size, and at acceptable polymerization rate and in addition, that the dispersing agent does not consume initiator. Other replacement candidates for C-8 have failed because of failing to provide one or more of these operability needs. One that had a chance for success, 8,2-TBS, failed because of the bioaccumulation problem as described above. Thus, from past experience, it was surprising to find a dispersing agent which not only satisfied operability but also safety.

With respect 6,2-TBS satisfying the high molecular weight operability need of PTFE, this too is unexpected in several respects. While C-8 acts as a dispersing agent for the making of PTFE, C-6 does not. C-6 has a six-carbon atom perfluoroalkyl group in contrast to the eight-carbon atom perfluoroalkyl group of C-8. 6,2-TBS also has a six-carbon atom perfluoroalkyl group. 6,2-TBS also has hydrogen atoms from the CH₂CH₂ group in greater concentration than 8,2-TBS. Hydrogen is a known chain transfer agent in the polymerization of TFE to make PTFE, which would reduce the molecular weight of the PTFE to less than desired level. Despite this greater concentration of hydrogen atoms, high molecular weight PTFE having a melt viscosity of at least 1 X 10⁹ Pa·s can still be made when 6,2-TBS is used as the dispersing agent.

### DETAILED DESCRIPTION OF THE INVENTION

The aqueous dispersion polymerization process of the present invention is conventional except for the use of 6,2-TBS as the dispersing agent for making the fluorocarbon polymer. The initiator is water-soluble; examples include ammonium persulfate, potassium persulfate, and disuccinic acid peroxide and will generally be used in the amount of 2-500 ppm based on the weight of water present. In the case of melt-fabricable tetrafluoroethylene copolymer, organic liquid such as CFC-113 can be present in the aqueous medium, but solvent-free aqueous dispersion polymerization is preferred. The polymerization to make PTFE is solvent free. In polymerization to make PTFE, wax may be present to reduce coagulaum formation; the amount of wax can be 0.1-12% based on the weight of water present.

6,2-TBS can be prepared from the known process starting with reaction of R_{f}I with CH₂=CH₂ to produce the mixture of compounds available as Zonyl TBS (8,2-TBS). In the reaction to make 8,2-TBS, R_{f} is a mixture of C4 to C16 perfluoroalkyl, averaging 8 carbon atoms. To obtain 6,2-TBS, the reactant R_{f}I is purified to obtain perfluorohexyl iodide, preferably wherein at least 90% of the perfluoroalkyl groups are perfluorohexyl, which purity is carried over into the eventual 6,2-TBS product. This purification can be carried out by distillation, and separation of the 6-carbon atom fraction from the other fractions present, the 4-carbon atom fraction having a boiling point of 67°C, the 6-carbon atom fraction boiling at 118°C, and the 8-carbon atom fraction boiling at 163°C, all at atmospheric pressure. Further information on the synthesis of Perfluoroalkyl iodide and distillation and reaction of the iodide to form 6,2-iodide is disclosed in N.S. Rao and B. E. Baker, "Textile Finishes and Fluorosurfactants", OrganoFluorine Chemistry: Principles and Commercial Applications, Ed. R.E. Banks et. al., Plenum Press, New York, 1994. The 6,2-TBS can be obtained from perfluorohexyl ethane iodide (6,2-iodide) by well-known chemistry, such as disclosed in U.S. Patent 4,784,809.

The amount of 6,2-TBS used as dispersing agent will generally be 0.01-0.4 percent based on the weight of water present in the case of making PTFE and will generally be 0.01-0.20 wt% in the case of making melt-fabricable tetrafluoroethylene copolymer. Perfluorohexyl ethane sulfonic acid is preferred over the salt because of the greater solubility of the acid. Alkali metal sulfonates, however, such as sodium and potassium, can be used. Ammonium sulfonate can also be used.

The polymerization can be carried out by charging the polymerization reactor with water, surfactant and monomer, agitating the contents of the reactor, and heating the reactor to the desired polymerization temperature, e. g. 50-110°C, and then adding initiator at the desired rate to start and continue the polymerization.

In the case of making PTFE, tetrafluoroethylene (TFE) is pressured into the reactor at a continuous rate to maintain a pressure of 0.3 to 7 MPa. TFE may be the only monomer used, in which case the PTFE formed will be homopolymer. Alternatively, an amount of perfluorinated copolymerizable comonomer other than TFE, or chlorotrifluoroethylene, can be added to the reactor to copolymerize with the TFE wherein the resultant PTFE is modified with less than 0.5 mol% of the comonomer to impart at least improved film forming properties upon sintering, while still retaining the PTFE character of the polymer. The resultant PTFE will generally be non-melt-fabricable, i.e. it will have a melt viscosity exceeding 1X10⁹ Pa.s at 380°C. Melt viscosity in this range is measured at 380°C by the tensile creep method in U.S. Patent 3,819,594. Chain transfer agent, such as ethane or methanol, can be present during the polymerization reaction to provide lower melt viscosity PTFE, e.g. 10 Pa.s to 1X10⁵ Pa.s measured at 372°C. Comonomer, if present will be chlorotrifluoroethylene or perfluoroolefin such as hexafluoropropylene, or perfluoro(alkyl vinyl ether), wherein the alkyl group contains 1 to 8 carbon atoms, preferably 2 or 3 carbon atoms. The polymerization is carried out to achieve the desired polymer solids concentration in the aqueous dispersion, e.g 20 to 60% based on the weight of water plus solids present, and the polymerization is stopped by stopping the TFE feed and venting the reactor to remove unreacted monomer.

In the case of making melt-fabricable tetrafluoroethylene copolymer, i.e. copolymer of TFE with one or more copolymerizable perfluorinated monomers, an amount of perfluorinated copolymerizable comonomer will also be added to the reactor, usually prior to the start of the polymerization reaction, but may also be added during the reaction if desired. The amount of comonomer added will be effective to incorporate sufficient comonomer into the TFE copolymer to make it melt fabricable, which amount will depend on the reactivity of the comonomer relative to TFE and the amount of incorporation necessary to impart melt-fabricability to the copolymer, this too depending on the particular comonomer used. Generally, the amount of comonomer incorporated into the TFE copolymer will be at least 0.5 mol% and may be as high as 15 mol% and higher, depending on the comonomer. The goal of melt fabricability is demonstrable by the copolymer being processible by one or more melt-processing techniques such as extrusion, injection molding and compression molding. Typically, the TFE copolymer will have a melt viscosity in the range of 10² to 10⁶ Pa.s. Melt viscosity is determined by A.S.T.M. method of D1238-52T, modified as disclosed in U.S. Patent 4,360,618. One skilled in the art will recognize that a variety of perfluorinated monomers other than TFE can be used to achieve melt-fabricable TFE copolymer, and this variety can be used in the process of the present invention. Examples of copolymerizable perfluorinated monomers include perfluoroolefin such as hexafluoropropylene (HFP), or perfluoro(alkyl vinyl ether), commonly called PAVE, wherein the alkyl group contains 1 to 8 carbon atoms, preferably 2 or 3 carbon atoms. More than one comonomer may be incorporated into the TFE copolymer, which for example may be a copolymer of TFE with HFP and PAVE. The polymerization is carried out to achieve the desired polymer solids concentration in the aqueous dispersion, e.g. 20 to 60% based on the weight of water plus solids present, and the polymerization is stopped by stopping the monomer feed and venting the reactor to remove unreacted monomer.

The preferred raw dispersion particle size (RDPS) of the perfluorocarbon polymer particles is 0.15 to 0.35 micrometers. Smaller particles are difficult to coagulate and cause excessively high extrusion pressures in past extrusion. Larger particles interfere with polymerization by premature coagulation and lead to incomplete sintering. The amount of 6,2-TBS dispersing agent used is effective to achieve the dispersion of polymer particles and preferably the preferred particle size within the range recited above.

Instead of the entire amount of the dispersing agent being added to the reactor at the beginning of the polymerization, a portion of the dispersing agent can be added during the polymerization reaction.

RDPS is measured on the as-polymerized polymer particles by photon correlation spectroscopy.

### Example 1

A horizontally disposed, cylindrical, stainless steel autoclave, having a capacity of 36,250 ml and a length to diameter ratio of about 1.5:1 and provided with a 4-bladed agitator running the length of the autoclave, was charged with 18 kg of demineralized water, 0.09 g of ferrous chloride, and 930 g of paraffin wax. At a temperature of 65°C, the autoclave was evacuated and purged with TFE three times. After the third evacuation, while the autoclave was still under vacuum, 34 g perfluorohexyl ethane sulfonic acid dispersing agent, 0.65 g methanol, and 0.08 g octylphenolethoxylate dissolved in 900 ml of demineralized water was charged. With the agitator at 46 rpm, the autoclave was brought to 90°C, pressured with tetrafluoro-ethylene monomer to 27 kg/cm² (380 psig) and 13 g of disuccinic peroxide (DSP), and 0.1 g of ammonium persulfate (APS) initiators dissolved in 1000 ml of demineralized water were added at a rate of 100 ml/min. After kick-off, the pressure was maintained at 27 kg/cm² by continuous TFE addition until the end of the batch. After 1.4 kg of TFE had reacted after kickoff, 27.2 g of perfluorohexyl ethane sulfonic acid dispersion agent dissolved in 1000 ml of demineralized water were added at a rate of 50 ml/min. The agitator rpm was adjusted to keep the rate of polymerization below 0.6 lb/min (272.4g/min) until the end of the batch. When a total of 15 kg of TFE monomer had been added to the autoclave, the feed valve was closed, the agitator was turned off and the autoclave was vented. The total polymerization time was 85 minutes.

The resulting dispersion was discharged from the autoclave, cooled, and the wax was removed to yield a dispersion of 46.5% solids with an average particle size of 0.174 micrometers. The resin had an SSG of 2.227, indicating a melt viscosity of greater than 1 X 10⁹ Pa·s at 380°C. SSG (standard specific gravity) was measured by the method of ASTM D-4895.

### Example 2

A similar reactor to that used in Example 1 but having a water capacity of 87.1 parts was charged with 50.9 parts by weight of demineralized water and 0.022 parts of perfluorohexyl ethane sulfonic acid dispersing agent. The reactor was pressure tested at 400 psig (28.4 kg/cm²) and 90°C while stirring the reactor at 46 rpm. The reactor was cooled to reduce its temperature below 30°C and was then evacuated and purged three times with TFE monomer. A reduced pressure was left on the reactor after the final evacuation. A valve was then opened to slowly release ethane chain transfer agent into the reactor until the pressure was raised by 11.3 psi (0.80 kg/cm²). The valve was then closed and the reactor was pressurized with TFE to a pressure of 380 psig (27 kg/cm²). A freshly prepared solution (1.4 parts) of 0.092 wt.% APS and 1.15 wt.% DSP in demineralized water was pumped into the reactor at a rate of 0.11 parts/minute to initiate polymerization. After polymerization began (10 psig drop in reactor pressure), additional TFE was added to the reactor so as to maintain the,reactor pressure at 380 psig (27 kg/cm²). After three parts TFE addition, 2.0 parts of a solution of 2.78% perfluorohexyl ethane sulfonic acid in demineralized water was pumped into the reactor at a rate of 0.20 parts/minute. After the addition of 15 parts of TFE, 0.48 parts of the same APS/DSP initiator solution used above was pumped into the reactor at 0.09 parts/minute. When 22 parts of TFE had been added to the reactor after kickoff (after 193 minutes), the TFE feed was stopped but the reaction was continued until the reactor pressure dropped to 185 psig (13.1 kg/cm²) after an additional 42 minutes reaction time. The reactor dispersion contained about 32% polymer by weight. The dispersion particle size was 0.156 micrometers. A portion of the dispersion was cooled, diluted to 16.9 wt.% with demineralized water, and 1.3 wt.% ammonium carbonate (based on polymer) was added. This mixture was coagulated by vigorous stirring to afford a powder which was collected on a filter and then dried at 150°C for two days. The melt viscosity of the powder was found to be 3.0 X 10⁴ poise at 372°C (3.0 X 10³ Pa·s). Melt viscosity was determined by ASTM method D1238-52T modified as described in U.S. Patent 4,380,618 except that the melt viscosity in poise was calculated as 36,910 divided by the observed extrusion rate expressed in grams per minute.

### Example 3

A horizontally disposed, cylindrical, stainless steel autoclave, having a capacity of 36,250 ml and a length to diameter ratio of about 1.5:1 and provided with a 4-bladed agitator running the length of the autoclave, was charged with 21.8 kg of demineralized water. At a temperature of 65°C, the autoclave was evacuated and purged with TFE three times. After the third evacuation, while the autoclave was still under vacuum, 25 g of perfluorohexyl ethane sulfonic acid dispersion agent dissolved in 1200 ml of demineralized water was charged. With the agitator at 35 rpm, the autoclave was brought to 95°C, pressured with hexafluoropropylene monomer to 28.9 kg/cm² (410 psig), and then pressured with tetrafluoroethylene monomer (3.1 kg) to 42.3 kg/cm² (600 psig), and 2.4 g of ammonium persulfate (APS) initiator dissolved in 300 ml of demineralized water was added at a rate of 25 ml/min. Then a solution of 8 g of potassium persulfate (KPS) initiator dissolved in 1000 ml of demineralized water was added at a rate of 10 ml/min for the remainder of the batch. After kick-off, the pressure was maintained at 42.3 kg/cm² by controlling the tetrafluorethylene feed rate while maintaining the agitator speed at 35 rpm until the end of the batch. When a total of 9.1 kg of TFE monomer had been added to the autoclave, the feed valve was closed, the agitator was turned off and the autoclave was vented. The total polymerization time was 150 minutes.

The resulting dispersion was discharged from the autoclave and cooled. The dispersion was coagulated with vigorous agitation to obtain a TFE/HFP copolymer fluff which was dried before analyses were carried out. The raw dispersion contained about 31.2% solids and had an average particle size of 0.164 micrometers. The coagulated polymer had a melt viscosity of 12.4 X 10³Pa·s (12.4 X 10⁴ poise), and an HFP content of 10.53 wt%. HFP content is determined on a 0.095-0.105 mm thick film pressed at 300°C, using Fourier transform infrared spectroscopy, as disclosed in U.S.Patent 4,380,618.

## Claims

1. A process of polymerizing tetrafluoroethylene, optionally with at least one other copolymerizable monomer, wherein said copolymerizable monomer is either perfluorinated, or, if present in an amount less than 0.5 mol% may additionally be chlorotrifluoroethylene, in an aqueous medium containing water soluble initiator and dispersing agent to obtain an aqueous dispersion of perfluorocarbon polymer particles, **characterized by** carrying out the polymerization wherein said dispersing agent is a compound of the formula C₆F₁₃-CH₂CH₂-SO₃M, wherein M is a cation having a valence of 1.

2. A process as claimed in claim 1 wherein said aqueous medium is solvent-free and said perfluorocarbon polymer is polytetrafluoroethylene optionally containing less than 0.5 mol% of said copolymerizable monomer.

3. A process as claimed in claim 1 wherein said monomer is perfluoroolefin or perfluoro(alkyl vinyl ether), wherein the alkyl group contains 1 to 8 carbon atoms.

4. A process as claimed in claim 1 wherein M is hydrogen.

5. A process as claimed in claim 1 wherein said perfluorocarbon polymer made using said compound is polytetrafluoroethylene having a melt viscosity of at least 1 x 10⁹ Pa.s at 380°C.

6. A process as claimed in claim 1 wherein said perfluorocarbon polymer made using said compound has a raw dispersion particle size of 0.15 to 0.35 micrometers.

7. A process as claimed in claim 1 wherein said perfluorocarbon polymer made using said compound is melt-fabricable tetrafluoroethylene copolymer, wherein the comonomer with said tetrafluoroethylene in said copolymer is one or more copolymerizable perfluorinated monomers.

8. A process as claimed in claim 7 wherein the comonomer with said tetrafluoroethylene in said copolymer is perfluoroolefin or perfluoro(alkyl vinyl ether) wherein the alkyl group contains 1 to 8 carbon atoms.

9. A process as claimed in claim 7 wherein M is hydrogen.

10. A process as claimed in claim 7 wherein said tetrafluoroethylene copolymer made using said compound has a raw dispersion particle size of 0.15 to 0.35 micrometers.

## Patentansprüche

1. Verfahren zum Polymerisieren von Tetrafluorethylen, wahlfrei mit mindestens einem anderen copolymerisierbaren Monomeren, wobei das copolymerisierbare Monomer entweder perfluoriert ist, oder, wenn in einer Menge geringer als 0,5 Mol% vorhanden, zusätzlich Chlortrifluorethylen sein kann, in einem wäßrigen Medium, enthaltend wasserlöslichen Initiator und Dispergiermittel, unter Erhalten einer wäßrigen Dispersion von Perfluorkohlenstoffpolymerteilchen, **gekennzeichnet durch** Durchführen der Polymerisation, wobei das Dispersionsmittel eine Verbindung der Formel C₆F₁₃-CH₂CH₂-SO₃M ist,
wobei M ein Kation mit einer Wertigkeit von 1 ist.

2. Verfahren nach Anspruch 1, wobei das wäßrige Medium lösungsmittelfrei ist, und das Perfluorkohlenstoffpolymer ist Polytetrafluorethylen, wahlfrei weniger als 0,5 Mol% des copolymerisierbaren Monomeren enthaltend.

3. Verfahren nach Anspruch 1, wobei das Monomer Perfluorolefin oder Perfluor(alkylvinylether) ist, wobei die Alkylgruppe 1 bis 8 Kohlenstoffatome enthält.

4. Verfahren nach Anspruch 1, wobei M Wasserstoff ist.

5. Verfahren nach Anspruch 1, wobei das Perfluorkohlenstoffpolymer, hergestellt unter Verwenden der Verbindung, Polytetrafluorethylen mit einer Schmelzviskosität von mindestens 1 x 10⁹ Pa·s bei 380°C ist.

6. Verfahren nach Anspruch 1, wobei das Perfluorkohlenstoffpolymer, hergestellt unter Verwenden der Verbindung, eine Rohdispersionsteilchengröße von 0,15 bis 0,35 Mikrometer hat.

7. Verfahren nach Anspruch 1, wobei das Perfluorkohlenstoffpolymer, hergestellt unter Verwenden der Verbindung, schmelzverarbeitbares Tetrafluorethylencopolymer ist, wobei das Comonomer mit dem Tetrafluorethylen in dem Copolymeren eines oder mehrere copolymerisierbare perfluorierte Monomere ist.

8. Verfahren nach Anspruch 7, wobei das Comonomer mit dem Tetrafluorethylen in dem Copolymeren Perfluorolefin oder Perfluor(alkylvinylether) ist, wobei die Alkylgruppe 1 bis 8 Kohlenstoffatome enthält.

9. Verfahren nach Anspruch 7, wobei M Wasserstoff ist.

10. Verfahren nach Anspruch 7, wobei das Tetrafluorethylencopolymer, hergestellt unter Verwenden der Verbindung, eine Rohdispersionsteilchengröße von 0,15 bis 0,35 Mikrometer hat.

## Revendications

1. Procédé de polymérisation de tétrafluoroéthylène, facultativement avec au moins un autre monomère copolymérisable, dans lequel ledit monomère copolymérisable est soit perfluoré, soit, s'il est présent dans une quantité inférieure à 0,5% en mole, peut en plus être du chlorotrifluoroéthylène, dans un milieu aqueux contenant un initiateur soluble dans l'eau et un agent de dispersion pour obtenir une dispersion aqueuse des particules du polymère de perfluorocarbone, **caractérisé par** l'exécution de la polymérisation dans laquelle ledit agent de dispersion est un composé de formule C₆F₁₃-CH₂CH₂-SO₃M, dans laquelle M est un cation ayant une valence de 1.

2. Procédé selon la revendication 1 dans lequel ledit milieu aqueux est sans solvant et ledit polymère de perfluorocarbone est du polytétrafluoroéthylène contenant facultativement moins de 0,5% en mole dudit monomère copolymérisable.

3. Procédé selon la revendication 1 dans lequel ledit monomère est une perfluorooléfine ou un perfluoro(alkylvinyléther), dans lequel le groupement alkyle contient 1 à 8 atomes de carbone.

4. Procédé selon la revendication 1 dans lequel M est hydrogène.

5. Procédé selon la revendication 1 dans lequel ledit polymère de perfluorocarbone obtenu en utilisant ledit composé est un polytétrafluoroéthylène ayant une viscosité en fusion d'au moins 1x10⁹ Pa.s à 380°C.

6. Procédé selon la revendication 1 dans lequel ledit polymère de perfluorocarbone obtenu en utilisant ledit composé a une taille de particule de dispersion brute de 0,15 à 0,35 micromètre.

7. Procédé selon la revendication 1 dans lequel ledit polymère de perfluorocarbone obtenu en utilisant ledit composé est un copolymère de tétrafluoroéthylène susceptible d'être fabriqué en fusion, dans lequel le comonomère avec ledit tétrafluoroéthylène dans ledit copolymère est un ou plusieurs monomère (s) perfluoré (s) copolymérisable(s).

8. Procédé selon la revendication 7 dans lequel le comonomère avec ledit tétrafluoroéthylène dans ledit copolymère est une perfluoro-oléfine ou un perfluoro(alkylvinyléther) dans lequel le groupement alkyle contient 1 à 8 atomes de carbone.

9. Procédé selon la revendication 7 dans lequel M est hydrogène.

10. Procédé selon la revendication 7 dans lequel ledit copolymère de tétrafluoroéthylène obtenu en utilisant ledit composé a une taille de particule de dispersion brute de 0,15 à 0,35 micromètre.
